# EUROPÄISCHE PATENTSCHRIFT

(11) **EP 3 238 218 B1**
(45) Veröffentlichungstag und Bekanntmachung des Hinweises auf die Patenterteilung: **13.03.2019**
(21) Anmeldenummer: 16791392.0
(22) Anmeldetag: 04.11.2016
(51) Int. Cl.: H01C 1/148, H01C 7/102, H01C 7/108, H01C 7/18, H01C 7/10, H01C 17/065, H01C 17/28, B32B 18/00, C04B 35/453, C04B 37/02, H01C 7/112, H01C 17/00

(54) **KERAMISCHES VIELSCHICHTBAUELEMENT UND VERFAHREN ZUR HERSTELLUNG EINES KERAMISCHES VIELSCHICHTBAUELEMENTS**
CERAMIC MULTILAYER COMPONENT AND METHOD FOR PRODUCING A CERAMIC MULTILAYER COMPONENT
COMPOSANT MULTICOUCHE CÉRAMIQUE ET PROCÉDÉ DE FABRICATION D'UN COMPOSANT CÉRAMIQUE MULTICOUCHE

(30) Priorität: 27.11.2015 DE 102015120640
(43) Veröffentlichungstag der Anmeldung: 01.11.2017
(73) Patentinhaber: TDK Electronics AG, 81671 München (DE)
(72) Erfinder: WOZNIAK, Uwe, 8530 Deutschlandsberg (AT); FEICHTINGER, Thomas, 8010 Graz (AT)
(74) Vertreter: Epping - Hermann - Fischer
(86) Internationale Anmeldenummer: PCT/EP2016/076726
(87) Internationale Veröffentlichungsnummer: WO 2017/089095

(56) Entgegenhaltungen:
- EP-A2- 2 276 042
- DE-A1- 10 026 258
- DE-A1- 10 110 680
- DE-C1- 10 132 798
- JP-A- 2001 035 741
- JP-A- 2010 027 804
- US-A1- 2012 032 757

## Beschreibung

Die vorliegende Patentanmeldung betrifft ein elektrisches Vielschichtbauelement und ein Verfahren zur Herstellung eines Vielschichtbauelements.

Vielschichtbauelemente basierend auf Zinkoxid sind als Varistoren allgemein bekannt. Zur elektrischen Kontaktierung von Vielschicht-Varistoren werden in der Regel kostenintensive Innenelektroden aus Silber und Palladium (Ag, Pd) verwendet.

Innenelektroden aus einer Silber-Palladium-Legierung werden dabei häufig zur Verringerung einer Diffusion des Elektrodenmaterials in das Keramikmaterial während des Sintervorgangs verwendet, wie beispielsweise aus dem Dokument US 4,675,644 A bekannt ist. Durch die Beigabe des Palladiums wird der Schmelzpunkt der Elektrodenschichten in geeigneter Weise angehoben, so dass die Elektrodenschicht zusammen mit der Keramik gesintert werden können und die Silberdiffusion während des Sinters reduziert wird. Die Palladiumzugabe hat jedoch den Nachteil, dass diese sehr teuer ist.

Darüber hinaus sind beispielsweise aus dem Dokument US 4,959,262 A Varistoren bekannt, bei denen der Reduzierung der Elektrodenschicht während des Sintervorgangs mit größeren Schichtdicken von bis zu 10 µm begegnet wird. Diese dicken Elektrodenschichten haben den Nachteil, dass - bedingt durch ein unterschiedliches Sinterverhalten der Materialien - verstärkt Delaminationen auftreten. Darüber hinaus haben dickere Innenelektroden einen höheren Volumenbedarf, was sich bei sehr klein dimensionierten Bauteilen als störend erweist.

DE 101 32 798 C1 offenbart ein Keramikmaterial auf der Basis von BaTi₄O₉, das zusätzlich noch 0,1-0,5 Gewichtsprozent Mn₂O₃ und Nd₂O₃ enthält.
JP 2001 035741 A offenbart ein Herstellungsverfahren für ein elektronisches Bauteil, das ein dielektrisches Porzellan verwendet. Hierbei werden Ag oder eine Ag-Legierung als Innenleiter verwendet. 0,3-1,5 Gew.-% AG werden zu einer dielektrischen Porzellanzusammensetzung aus BaO-Nd2O3-TiO2 hinzugefügt.

DE 100 26 258 A1 offenbart eine keramische Schutzschicht für SMD-fähige Vielschichtvaristoren auf der Basis von Perowskitstrukturen, wobei das Blei ganz oder teilweise durch Wismut ersetzt ist.

US 2012/032757 A1 offenbart ein Vielschichtbauelement, das ein dielektrisches Keramikmaterial umfasst, das mit einer Varistorkeramik zusammengesintert werden kann, um ein monolithisches Vielschichtbauelement zu bilden.

DE 101 10 680 A offenbart ein elektrisches Bauelement mit einem Grundkörper, der ein Keramikmaterial enthält, mit wenigstens zwei auf der Oberfläche des Grundkörpers vorgesehenen Kontaktschichten, bei dem der von Kontaktschichten freie Teil der Oberfläche des Grundkörpers wenigstens teilweise von einer Schutzschicht bedeckt ist, die eine Spinell-Keramik der Zusammensetzung AB₂O₄ umfasst.

EP 2 276 042 A2 offenbart ein Verfahren zur Herstellung von Zinkoxidvaristoren, bei dem das Dotieren von Zinkoxid und das Sintern von Zinkoxidkörnern mit einem hochohmigen Sintermaterial durch zwei unabhängige Verfahren durchgeführt werden. Das dotierte Zinkoxid und das hochohmige Sintermaterial werden in einem vorbestimmten Verhältnis gut gemischt und dann zur Herstellung der Zinkoxidvaristoren durch herkömmliche Technologie durch Niedertemperatursintern (weniger als 900 ° C) verwendet.

Eine zu lösende Aufgabe besteht darin, ein Trägerelement mit verbesserten Eigenschaften und ein Verfahren zur Herstellung eines verbesserten Trägerelements anzugeben.

Diese Aufgabe wird durch ein Trägerelement gemäß der unabhängigen Ansprüche 1 und 8 gelöst. Die Erfindung ist definiert durch unabhängigen Ansprüche. Vorteilhafte Ausgestaltungen sind in den Unteransprüchen angegeben.

Gemäß einem Aspekt wird ein Trägerelement beschrieben. Das Trägerelement, kurz Bauelement, weist einen keramischen Grundkörper auf. Der Grundkörper ist beispielsweise eine Varistorkeramik. Der Grundkörper weist eine Zusammensetzung auf mit ≥ 90 % Mol ZnO, 0,5 bis 5 % Mol Sb₂O₃ oder Bi₂O₃, 0,05 bis 2 % Mol Co₃O₄, Mn₂O₃, SiO₂ und/oder Cr₂O₃ sowie < 0,1 % Mol B₂O₃, Al₂O₃ und/oder NiO. Das Bauelement weist ferner eine Metallstruktur auf, die wenigstens eine Innenelektrode und wenigstens ein Via aufweist. Die Metallstrukturen können interne Strukturen sein. Das bedeutet, die Metallstrukturen können zumindest teilweise in einem Innenbereich des Grundkörpers angeordnet sein. Die Metallstrukturen können ferner auch externe Strukturen sein. Das bedeutet, die Metallstrukturen können an einem Außenbereich des Grundkörpers angeordnet sein.

Der Grundkörper und die Metallstruktur sind co-gesintert. Das bedeutet, dass Grundkörper und Metallstruktur während des Herstellungsprozesses des Bauelements einen gemeinsamen Sinterprozess durchlaufen.
Der Grundkörper weist eine Dotierung mit einem Material der Metallstruktur auf. Insbesondere ist der Grundkörper mit einer chemischen Verbindung des Metalls der Metallstruktur dotiert. Der Grundkörper weist eine Dotierung von 0,1 bis 1 Molprozent, beispielweise 0,5 oder 0,7 Molprozent, aus einer chemischen Verbindung des Metalls der Metallstruktur auf. Die Metallstruktur weist ≥ 99 % Silber auf. Die Dotierungsmenge des Grundkörpers ist vorzugsweise so angepasst, dass der Grundkörper bereits vor einem Sintervorgang an dem Metall der Metallstruktur gesättigt ist. Der Grundkörper ist vorzugsweise derart mit dem Material der Metallstruktur dotiert, dass eine Diffusion von Material aus der Metallstruktur in den Grundkörper während eines Sintervorgangs verringert bzw. vorzugsweise unterbunden wird. Der Grundkörper ist eine mit Flüssigphasen gesinterte Keramik.

Die Sättigung des Grundkörpers an dem Metall der Metallstruktur führt dazu, dass der Grundkörper während des Sinterns kein Material der Metallstruktur mehr aufnehmen kann. Dadurch findet bei der Metallstruktur kein Materialverlust mehr während des Sinterns statt. Bei der Art und Menge der Metallstrukturen muss folglich nicht mehr der Metallverlust berücksichtigt werden. So müssen beispielsweise keine Materialien mit niedriger Diffusionskonstante verwendet werden. Außerdem muss nicht mehr deutlich mehr Metall vorgehalten werden, als nach dem Sintern eigentlich benötigt wird, sondern die Metallmenge kann viel kleiner und genauer dimensioniert werden. Dies führt zur Reduzierung von Kosten und zu deutlich besser dimensionierten Metallstrukturen nach dem Sintern, was insbesondere bei sehr kleinen Strukturen entscheidend ist.

Die Metallstruktur kann eine Vielzahl von Innenelektroden aufweisen. Die Innenelektroden sind innerhalb des Bauelements, insbesondere im Grundkörper, angeordnet. Insbesondere weist das Bauelement alternierende keramische Schichten des Grundkörpers mit dazwischen liegenden Innenelektroden auf. Alternativ oder zusätzlich kann die Metallstruktur wenigstens eine Außenmetallisierung, beispielsweise zwei Außenmetallisierungen, aufweisen. Die Außenmetallisierung ist an einer Außenseite des Bauelements angeordnet. Die Metallstruktur kann ein Via oder beispielsweise zwei, drei oder vier Vias aufweisen. Die Vias sind innerhalb des Grundkörpers angeordnet. Die Vias dienen zu zumindest teilweisen Durchkontaktierung des Grundkörpers. Über ein Via kann beispielsweise eine Außenmetallisierung mit einer Innenelektrode verbunden werden.

Vorzugsweise weist die Metallstruktur eine Dotierung auf. Die Metallstruktur ist vorzugsweise mit einem Material des keramischen Grundkörpers dotiert. Beispielsweise weist die Metallstruktur eine Dotierung mit ZnO auf. Alternativ dazu kann die Metallstruktur eine Dotierung mit Sb₂O₃, Bi₂O₃, Co₃O₄, Mn₂O₃, SiO₂, Cr₂O₃, B₂O₃, Al₂O₃, NiO oder einer Kombination davon aufweisen.

Durch die Sättigung der Keramik an Metall der Metallstrukturen kann beim Co-Sintern von Keramik und Metallstruktur ein Verschwinden oder Ausdünnen der Metallstruktur wirksam verhindert werden. So können insbesondere sehr dünne Innenelektroden, Außenmetallisierungen und/oder Vias ausgebildet werden. Dadurch können sehr kleine und universell einsetzbare Bauteile realisiert werden. Vorzugsweise beträgt eine Dicke oder laterale Ausdehnung der Metallstruktur weniger oder gleich 1,5 µm. Beispielsweise weist eine Innenelektrode somit eine Dicke von 1,5 µm oder weniger auf, beispielsweise 1,2 µm oder 1,0 µm.

Gemäß einem Ausführungsbeispiel weist der Grundkörper Wismutoxid auf. Alternativ dazu kann der Grundkörper auch Praseodymoxid aufweisen. Um das Bauelement beispielweise mit sehr dünnen Metallinnenstrukturen herzustellen, muss eine Keramik bereitgestellt werden, welche bereits unterhalb des Schmelzpunkts des Elektrodenmaterials gesintert werden kann. Während des Sinterns wird daher eine Flüssigphase benötigt, die bereits bei diesen tiefen Temperaturen existiert. Wismutoxid hat beispielsweise einen Schmelzpunkt von unter 840 °C. Daher wird bei der Keramik beispielsweise Wismutoxid als Flüssigphase verwendet.

Die Verwendung von Wismutoxid erhöht die Diffusion des Materials der Metallstruktur während des Sinterns. Durch die Dotierung des Grundkörpers mit dem Material der Metallstruktur kann trotz der Beigabe von Wismutoxid eine Diffusion des Materials der Metallstruktur während des Sintervorgangs wirksam unterbunden werden. Dadurch kann insgesamt die Menge des Wismutoxids als Sinterhilfsmittel erhöht werden, ohne dass es zu einem erhöhten Materialverlust der Metallstruktur kommt. Die Erhöhung des Anteils des Wismutoxids führt beispielsweise zu einer niedrigeren Porosität des Bauelements und somit zu einem Bauelement mit verbesserten Eigenschaften.

Die Dotierung des Grundkörpers weist Silberoxid oder Silbercarbonat auf. Durch die Silberdotierung des Grundkörpers kann der Verlust durch Diffusion von Elektrodenmaterial aus der Metallstruktur wirksam verhindert werden. Gleichzeitig kann auf das Palladium in der Metallstruktur verzichtet werden. Auch brauchen für die Metallstruktur nicht sehr leicht oxidierbare Metalle wie Nickel oder Aluminium verwendet werden, die beim Co-Sintern mit dem Grundkörper, der beispielsweise zu einem großen Anteil Zinkoxid aufweist, viele Probleme verursachen, was die Qualität des Bauelements beeinträchtigen würde.

Durch die Dotierung des Grundkörpers ist der Silbergehalt im Grundkörper immer unabhängig von der Sinterung, der Rezeptur des keramischen Materials des Grundkörpers oder der Form und Menge der Metallstrukturen. Dies führt dazu, dass der Grundkörper sowohl hinsichtlich seiner thermischen Eigenschaften (thermische Ausdehnung, Schwund), als auch hinsichtlich seiner elektrischen Eigenschaften (Kapazität, U-I-Kennlinie, Robustheit) immer sehr gleichbleibende Eigenschaften besitzt, unabhängig davon welche und wie viele Metallstrukturen verwendet werden.

Silber hat ferner einen niedrigen Schmelzpunkt im Vergleich zu anderen Metallen, wie beispielsweise Palladium. Durch die Verwendung von Silber als Material der Metallstruktur muss daher der Sintervorgang bei relativ niedrigen Temperaturen, beispielsweise 960°C oder weniger, durchgeführt werden.

Gemäß einem Ausführungsbeispiel weist das Trägerelement wenigstens eine Passivierungsschicht auf. Die Passivierungsschicht oder isolierende Schicht ist vorzugsweise wenigstens an einer Oberfläche des Grundkörpers angeordnet. Die Passivierungsschicht kann um die gesamte Oberfläche des Grundkörpers herum angeordnet sein. Alternativ dazu bedeckt die Passivierungsschicht die Oberfläche des Grundkörpers nur teilweise. Die Passivierungsschicht ist dazu ausgebildet und angeordnet das Bauelement gegen Feuchtigkeit und chemischen Medien zu schützen und/oder elektrisch zu isolieren.

Die Passivierungsschicht weist beispielsweise eine Keramik und/oder ein Glas mit einem Füllmaterial auf. Die Passivierung kann eine Varistorkeramik aufweisen. Vorzugsweise ist die Passivierungsschicht co-gesintert. Mit anderen Worten, Grundkörper, Metallstruktur und Passivierungsschicht durchlaufen den Sintervorgang gemeinsam. Die Passivierungsschicht wird daher vor dem Sintervorgang an dem Grundkörper angeordnet.

Vorzugsweise ist die Passivierungsschicht mit dem Material der Metallstruktur, beispielweise Silber, dotiert. Die Dotierung ist höher oder gleich einer Sättigungskonzentration des Materials der Metallstruktur in der Passivierungsschicht. Die Passivierungsschicht kann ferner mit Material des keramischen Grundkörpers dotiert sein. Vorzugsweise ist die Passivierungsschicht mit den Hauptdotierstoffen aus dem keramischen Grundkörper dotiert. Die Passivierungsschicht kann eine Dotierung mit ZnO, Sb₂O₃, Bi₂O₃, CO₃O₄, Mn₂O₃, SiO₂, Cr₂O₃, B₂O₃, Al₂O₃, NiO oder einer Kombination davon aufweisen.

Wird zusätzlich zur Metallstruktur auch die Passivierungsschicht mitgesintert, so bedeutet diese während des Sinterns eine Senke für das diffundierende Material der Metallstruktur. Durch die ausreichende Dotierung der Passivierungsschicht mit dem Material der Metallstruktur, beispielsweise mit Silber, wird sichergestellt, dass die Passivierungsschicht während des Sinterns kein weiteres Metall aufnehmen kann. Dadurch bleibt die Qualität der co-gesinterten Metallstruktur immer bestehen, egal wieviel Passivierungsmaterial verwendet wird.

In der Passivierungsschicht ist die Dotierung mit dem Material des Metallstruktur vorzugsweise höher als im Grundkörper. Vorzugsweise ist die Passivierungsschicht zu mehr als 1 Molprozent, beispielsweise 2 oder 5 Molprozent, mit dem Metall der Metallstruktur dotiert. Insbesondere kann die Dotierung des Passivierungsschicht höher als der Sättigungswert sein, da sich dort kein aktiver Bereich mehr befindet, und das Material der Metallstruktur im Grundkörper nur bis zum Sättigungswert steigen kann, nicht jedoch höher.

Gemäß einem weiteren Aspekt wird ein Verfahren zur Herstellung eines Trägerelements angegeben. Das Trägerelement entspricht vorzugsweise dem oben beschriebenen Trägerbauelement. Insbesondere kann das Herstellungsverfahren zur Herstellung eines wie oben beschriebenen Trägerbauelements dienen. Alle Merkmale, die im Zusammenhang mit dem Trägerbauelement beschrieben wurden, gelten auch für das Verfahren und umgekehrt. Das Verfahren weist die folgenden Schritte auf:
- Anordnen von Schichten aufweisend eine Keramikmasse und Schichten aufweisend eine Elektrodenpaste abwechselnd übereinander zu einem Schichtstapel zur Herstellung eines Grünkörpers. Die Keramikmasse ist mit
   einem Material der Elektrodenpaste, insbesondere mit einer chemischen Verbindung des Metalls der Elektrodenpaste, dotiert. Vorzugsweise ist die Keramikmasse zu 0,1 bis 1 Molprozent mit dem Material der Elektrodenpaste dotiert.

- Einbringen von zumindest einem Via in den Grünkörper und
- Sintern des Grünkörpers.

Das durch das Verfahren hergestellte Trägerelement weist ein Keramikmaterial auf, das mit einem Anteil des Elektrodenmaterials dotiert ist und bei dem das Keramikmaterial zusammen mit dem metallischen Material gesintert ist. Durch die Dotierung der Keramik kann der Verlust durch Diffusion von Elektrodenmaterial verringert bzw. unterbunden werden.

Vorzugsweise weist die Elektrodenpaste ferner eine Dotierung mit einem Material der Keramikmasse auf. Beispielsweise ist die Elektrodenpaste mit ZnO dotiert. Aber auch andere Dotierungen der Elektrodenpaste mit Material der Keramikmasse (beispielsweise mit Sb₂O₃, Bi₂O₃, Co₃O₄, Mn₂O₃, SiO₂, Cr₂O₃, B₂O₃, Al₂O₃, NiO oder einer Kombination davon) sind vorstellbar.

Die Keramikmasse ist vorzugsweise mit Silberoxid oder Silbercarbonat dotiert. Gemäß einem Ausführungsbeispiel weist die Keramikmasse Zinkoxid und Wismutoxid auf. Vorzugsweise erfolgt das Sintern bei einer Temperatur von weniger oder gleich 1000°C, beispielsweise bei 960°C. Insbesondere erfolgt das Sintern bei einer Temperatur von 960°C oder weniger, wenn die Elektrodenpaste Silber aufweist.

Gemäß einem Ausführungsbeispiel weist das Verfahren den folgenden zusätzlichen Schritt auf:
- Aufbringen einer isolierenden Schicht auf zumindest einer Oberseite der Keramikmasse, wobei die isolierende Schicht mit einem Material der Elektrodenpaste dotiert ist. Die isolierende Schicht kann ferner mit einem Material der Keramikmasse dotiert sein. Vorzugsweise ist die isolierende Schicht mit den Hauptdotierstoffen aus der Keramikmasse dotiert.
Die isolierende Schicht ist vorzugsweise zu einem höheren Anteil mit dem Material der Elektrodenpaste dotiert, als die Keramikmasse. Die isolierende Schicht wird vor dem Sintern aufgebracht. Die isolierende Schicht weist beispielsweise eine weitere Keramikmasse auf.

Die Erfindung wird im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Gemäß einem Ausführungsbeispiel weist die Keramikmasse Zinkoxid und Wismutoxid auf. Vorzugsweise erfolgt das Sintern bei einer Temperatur von weniger oder gleich 1000°C, beispielsweise bei 960°C. Insbesondere erfolgt das Sintern bei einer Temperatur von 960°C oder weniger, wenn die Elektrodenpaste Silber aufweist. Beispielsweise erfolgt das Sintern bei einer Temperatur von größer oder gleich 1100°C, beispielsweise 1200°C, wenn die Elektrodenpaste im Wesentlichen Palladium aufweist. Beispielsweise erfolgt das Sintern bei einer Temperatur von ca. 1000°C, wenn die Elektrodenpaste eine Legierung aus Palladium und Silber aufweist.

Gemäß einem Ausführungsbeispiel weist das Verfahren den folgenden zusätzlichen Schritt auf:
- Aufbringen einer isolierenden Schicht auf zumindest einer Oberseite der Keramikmasse, wobei die isolierende Schicht mit einem Material der Elektrodenpaste dotiert ist. Die isolierende Schicht kann ferner mit einem Material der Keramikmasse dotiert sein. Vorzugsweise ist die isolierende Schicht mit den Hauptdotierstoffen aus der Keramikmasse dotiert.
Die isolierende Schicht ist vorzugsweise zu einem höheren Anteil mit dem Material der Elektrodenpaste dotiert, als die Keramikmasse. Die isolierende Schicht wird vor dem Sintern aufgebracht. Die isolierende Schicht weist beispielsweise eine weitere Keramikmasse auf.

Die Erfindung wird im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.
- Figur 1: zeigt eine schematische Darstellung eines Vielschichtbauelements im Querschnitt,
- Figur 2: zeigt das Vielschichtbauelement aus Figur 1 in einer Aufsicht,
- Figur 3: zeigt eine schematische Darstellung eines Vielschichtbauelements im Querschnitt,
- Figur 4: zeigt eine schematische Darstellung eines Vielschichtbauelements im Querschnitt,
- Figur 5: zeigt das Vielschichtbauelement aus Figur 4 in einer Aufsicht,
- Figur 6A: zeigt eine Aufnahme eines realisierten Vielschichtbauelements nach dem Stand der Technik,
- Figur 6B: zeigt eine Aufnahme eines realisierten erfindungsgemäßen Vielschichtbauelements,
- Figur 7: zeigt eine Aufnahme eines realisierten erfindungsgemäßen Vielschichtbauelements.

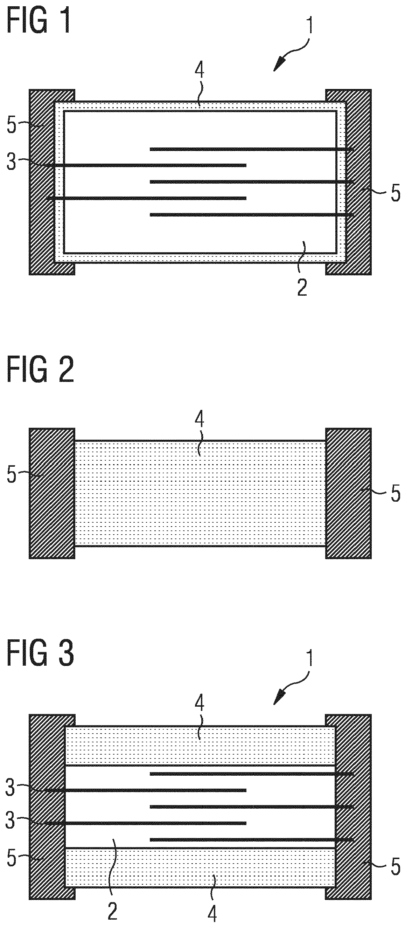

Die Figur 1 zeigt eine schematische Darstellung eines Vielschichtbauelements im Querschnitt.

Das Vielschichtbauelement 1 ist ein Varistorvielschichtbauelement. Das Vielschichtbauelement 1 weist einen keramischen Grundkörper 2 auf. Der Grundkörper 2 besteht aus mehreren Schichten. Das Vielschichtbauelement 1 weist Metallstrukturen auf. Insbesondere sind in diesem Ausführungsbeispiel zwischen den Schichten des Grundkörpers 2 Innenelektroden 3 angeordnet. Innenelektroden 3 und keramischer Grundkörper 2 sind zusammen gesintert (co-gesintert), um das fertige Vielschichtbauelement 1 zu erhalten.

Der Grundkörper 2 ist gemäß diesem Ausführungsbeispiel ein Zinkoxid (ZnO)-Varistor. Insbesondere weist der Grundkörper 2 zu etwa 95 Molprozent ZnO auf. Als weiteres Material des Grundkörpers kann Sb₂O₃, Bi₂O₃, beispielsweise im Bereich zwischen 0,5 und 5 Molprozent, enthalten sein. Ferner kann der Grundkörper 2 Co₃O₄, Mn₂O₃, SiO₂, Cr₂O₃ aufweisen, beispielsweise im Bereich von 0,05 bis 0,2 Molprozent. Mit Konzentrationen von kleiner 0,1 Molprozent können ferner Materialein wie B₂O₃, Al₂O₃, und NiO enthalten sein. Ferner weist die Keramik ein Sinterhilfsmittel, wie beispielsweise Wismutoxid, auf.

Die Innenelektroden 3 weisen ein Metall auf. Insbesondere weisen die Innenelektroden 3 Silber (Ag) auf. Vorzugsweise weisen die Innenelektroden zu mehr als 90 Gewichtsprozent Silber auf, beispielsweise zu 95 oder 98 oder 99 Gewichtsprozent. Alternativ zu dem Silber können die Innenelektroden 3 ein anderes Metall, zum Beispiel Palladium aufweisen. Vorzugsweise weisen die Innenelektroden 3 in diesem Fall im Wesentlichen Palladium auf.

Die Innenelektroden 3 sind besonders dünn ausgeführt. Insbesondere weisen die Innenelektroden 3 eine Dicke von kleiner oder gleich 1,5 µm auf, beispielsweise 1,4 µm oder 1,2 µm oder 1,0 µm. Die Dicke der Innenelektroden 3 ist vorzugsweise derart gewählt, dass diese gerade ausreichend ist, um einen Sinterprozess zu überstehen. Durch die nur geringe Dicke der Innenelektroden 3 ist die Gefahr einer Delamination, bei der sich die Elektrodenschicht von dem Keramikmaterial des Grundkörpers 2 löst, wodurch das Bauelement 1 instabil wird, erheblich reduziert. Ferner hat eine Elektrodenschicht von geringer Dicke den Vorteil, dass ein Volumen des Bauelements 1 bei gleichbleibender Funktion besser ausgenutzt werden kann.

Der Grundkörper 2 weist als Material ferner Elektrodenmaterial auf. Insbesondere ist der Grundkörper 2 mit einer chemischen Verbindung des Metalls der Innenelektroden 3 dotiert. Vorzugsweise ist das Keramikmaterial des Grundkörpers 2 mit Silberoxid oder Silbercarbonat dotiert. Alternativ dazu kann der Grundkörper auch mit einer Palladiumverbindung dotiert sein, wenn die Innenelektroden 3 entsprechend Palladium aufweisen. Beispielsweise ist der Grundkörper zu einem Anteil zwischen 0,1 und 1 Molprozent mit der chemischen Verbindung des Metalls der Innenelektroden 3 dotiert.

Durch die Dotierung des Keramikmaterials des Grundkörpers 2 mit Elektrodenmaterial, kann eine Diffusion des Materials der Innenelektroden 3 in das Keramikvolumen während eines Sintervorgangs kontrolliert bzw. vermieden werden. Durch den Anteil an Elektrodenmaterial in der Keramik kann insbesondere ein Diffusionsgleichgewicht erreicht werden, das die Diffusion von Elektrodenmetall in die Keramik während des Sinterns verhindert. Der Einfluss der Innenelektroden 3 auf die Keramikeigenschaften kann somit verringert werden.

Nach dem Sintern von keramischem Grundkörper 2 und Innenelektroden 3 ist bei diesem Ausführungsbeispiel auf das Vielschichtbauelement 1 eine Passivierungsschicht 4 aufgebracht. Die Passivierungsschicht 4 ist auf einer Oberfläche bzw. Außenseite des Grundkörpers 2 aufgebracht. Insbesondere bedeckt die Passivierungsschicht 4 die gesamte Oberfläche des Grundkörpers 2. Die Passivierungsschicht 4 schützt den Grundkörper 2 vor äußeren Einflüssen. Die Passivierungsschicht 4 kann beispielsweise Glas mit einem Füllmaterial oder eine Keramik aufweisen. Die Passivierungsschicht 4 kann eine Varistorkeramik aufweisen.

Ferner weist das Vielschichtbauelement 1 Außenmetallisierungen 5 zum elektrischen Anschluss des Vielschichtbauelements 1 auf. Die Außenmetallisierungen 5 sind an gegenüberliegenden Seitenflächen des Bauelements 1 angeordnet. Die Außenmetallisierungen 5 weisen vorzugsweise das gleiche Material auf wie die Innenelektroden 3. Beispielsweise weisen die Außenmetallisierungen 5 Silber auf.

Die Außenmetallisierungen 5 sind auf der Passivierungsschicht 4 angeordnet. Die Außenmetallisierungen 5 sind in diesem Ausführungsbeispiel ebenfalls nach dem Sintervorgang aufgebracht. Die Figur 2 zeigt die nach der Sinterung aufgetragene Passivierungsschicht 4 sowie die Außenmetallisierungen 5 in einer Aufsicht.

Die Figur 3 zeigt eine schematische Darstellung eines Vielschichtbauelements gemäß eines weiteren Ausführungsbeispiels.

Im Unterschied zu dem in Zusammenhang mit den Figuren 1 und 2 beschriebenen Vielschichtbauelement, ist bei dem in Figur 3 gezeigten Vielschichtbauelement 1 die Passivierungsschicht 4 zusammen mit dem Grundkörper 2 und den Innenelektroden 3 gesintert. Zu diesem Zweck wird die Passivierungsschicht 4 vor dem Sintern auf den Grundkörper 2 aufgebracht. Die Passivierungsschicht 4 wird dabei auf der gesamten Oberfläche des Grundkörpers 2 oder nur auf Teilbereiche der Oberfläche des Grundkörpers 2 aufgebracht.

Um die Passivierungsschicht 4 co-zusintern, ist das Material der Passivierungsschicht 4 mit Elektrodenmaterial dotiert. Vorzugsweise ist die Passivierungsschicht 4 mit Silber dotiert. Dabei kann die Silberdotierung gleich groß wie oder größer als der Sättigungswert des Silbers in der Passivierungsschicht 4 sein, weil sich in der Passivierungsschicht 4 kein elektrisch aktiver Bereich mehr befindet. Durch die Dotierung der Passivierungsschicht 4 kann eine Degradation der Metallstrukturen (Innenelektroden 3) während des Sinterns verhindert werden.

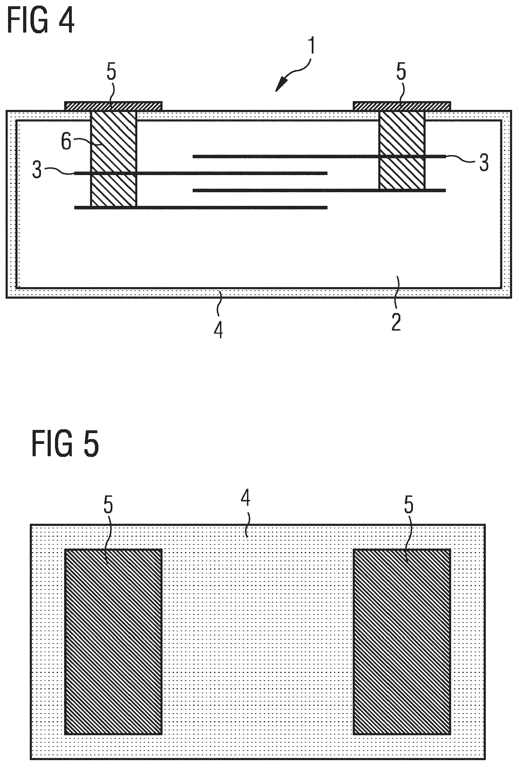

Die Figur 4 zeigt eine schematische Darstellung eines Vielschichtbauelements gemäß eines weiteren Ausführungsbeispiels.

In diesem Ausführungsbeispiel weist das Vielschichtbauelement 1 einen keramischen Grundkörper 2 auf, wobei der Grundkörper 2 als ZnO Substrat oder Trägerelement ausgeführt ist.

In dem Grundkörper 2 sind Metallstrukturen angeordnet. Insbesondere sind in dem Grundkörper 2 Innenelektroden 3 und Vias 6 angeordnet. Während die Innenelektroden 3 den Grundkörper 2 horizontal durchlaufen, sind die Vias 6 senkrecht zu den Innenelektroden 3 angeordnet. Innenelektroden 3, Vias 6 und keramischer Grundkörper 2 sind co-gesintert, um das fertige Vielschichtbauelement 1 zu erhalten.

Die Innenelektroden 3 und Vias 6 weisen ein Metall auf. Vorzugsweise weisen die Innenelektroden 3 und Vias 6 Silber auf. Alternativ dazu können die Innenelektroden 3 und Vias 6 auch Palladium aufweisen, wie oben beschrieben wurde. Wie bereits in Zusammenhang mit dem Ausführungsbeispiel gemäß den Figuren 1 und 2 beschrieben, sind die Metallstrukturen (Innenelektroden 3, Vias 6) besonders dünn ausgeführt. Die Innenelektroden 3 weisen eine Dicke von kleiner oder gleich 1,5 µm auf, beispielsweise 1,0 µm oder 1,2 µm. Auch die Vias 6 weise eine nur geringe laterale Ausdehnung auf.

Der Grundkörper 2 weist als Material ferner Material der Metallstrukturen auf. Hierdurch wird eine Diffusion von Elektrodenmaterial in den Grundkörper 2 während des Sintervorgangs verhindert. Des Weiteren wird auf die Ausführungen in Zusammenhang mit den Figuren 1 und 2 verwiesen.

Ebenso wie das Vielschichtbauelement 1 gemäß den Figuren 1 und 2, weist das Vielschichtbauelement 1 gemäß Figur 4 eine Passivierungsschicht 4 sowie Außenmetallisierungen 5 auf. Passivierungsschicht 4 und Außenmetallisierungen 5 sind in diesem Ausführungsbeispiel nach dem Sintervorgang aufgebracht. Die Figur 5 zeigt die nach der Sinterung aufgetragene Passivierungsschicht 4 sowie die Außenmetallisierungen 5 in einer Aufsicht.

Gleichermaßen können Passivierungsschicht 4 und Außenmetallisierung 5 auch co-gesintert sein, wie in Zusammenhang mit den vorangegangenen Figuren bereits beschrieben wurde. Für die Passivierungsschicht 4 ist in diesem Fall eine ausreichende Dotierung mit dem Material der Metallstrukturen erforderlich.

Im Folgenden wird das Verfahren zur Herstellung eines Vielschichtbauelements beispielhaft beschrieben. Insbesondere wird ein Verfahren zur Herstellung eines Vielschichtbauelements beschrieben, welches Metallstrukturen aufweist, die im Wesentlichen Silber aufweisen. Alternativ dazu kann durch ein entsprechendes Verfahren auch ein Vielschichtbauelement hergestellt werden, welches Metallstrukturen aufweist, die im Wesentlichen Palladium oder eine Legierung aus Palladium und Silber aufweisen.

Zur Herstellung von Varistoren mit Vielschichtstruktur werden zunächst grüne keramische Folien aus den dielektrischen keramischen Komponenten hergestellt. Wie bereits beschrieben, können die keramischen Folien die folgenden Bestandteile aufweisen:
- ZnO zu etwa 95 Molprozent;
- Dotierung mit Sb₂O₃, Bi₂O₃ im Bereich zwischen 0,5 und 5 Molprozent;
- Dotierung mit Co₃O₄, Mn₂O₃, SiO₂, Cr₂O₃ im Bereich von 0,05 bis 2 Molprozent;
- Dotierung mit B₂O₃, Al₂O₃, und NiO mit Konzentrationen von kleiner 0,1 Molprozent.

Ferner muss die Keramik so beschaffen sein, dass sie bereits unter dem Schmelzpunkt des Materials der Metallstrukturen (vorzugsweise Silber) mit hoher Qualität gesintert werden kann. Während des Sinterns wird daher eine Flüssigphase benötigt, die bereits bei tiefen Temperaturen existiert. Dies wird durch eine Flüssigphase wie Wismutoxid gewährleistet. Die Keramik basiert folglich auf mit Wismutoxid dotiertem Zinkoxid. Die Dotierung mit Wismutoxid erhöht im Allgemeinen die Diffusion des Silbers aus den Innenelektroden 3, was jedoch durch die Dotierung der Keramik mit Silber verhindert wird.

Die Keramik ist insbesondere mit Silberoxid, oder Silbercarbonat dotiert. Die Dotierung ist dabei so gewählt, dass die Keramik bereits vor dem Sintern an Silber gesättigt ist. Die Sättigung führt dazu, dass die Keramik während des Sintervorgangs kein Silber mehr aufnehmen kann. Dadurch findet bei der Metallstruktur (hier: Innenelektroden 3) kein Materialverlust während des Sinterns statt. Durch die Dotierung der keramischen Folien mit Silberoxid / Silbercarbonat kann der Keramikrezeptur auch eine größere Menge an Sinterhilfsmittel wie Wismutoxid beigemischt werden, um beispielsweise die Porösität zu erniedrigen.

Letztlich weist die Keramik noch eine organische Bindemittelzubereitung auf.

Auf diese Keramikfolien werden die Innenelektroden 3 aufgebracht, indem die grüne Keramik mit einer Metallisierungspaste in dem Elektrodenmuster beschichtet wird. Diese metallisierten grünen Folien werden gestapelt. Als Metallisierungspaste bzw. Elektrodenpaste für Innenelektroden wird eine Paste verwendet, die als metallische Komponente im Wesentlichen Silber aufweist.

Der Grünkörper wird anschließend gesintert, wobei der Binder, insbesondere seine organischen Bestandteile, verflüchtigt. Die Sintertemperatur wird an das Material der Innenelektroden 3 angepasst. Bei den Ag-Innenelektroden beträgt die Stintertemperatur vorzugsweise weniger als 1000°C, besonders bevorzugt weniger als 960°C. Die Sintertemperatur beträgt beispielsweise 900°C.

Die Diffusion von Elektrodenmaterial in die Keramik während des Sinterns verhält sich damit folgendermaßen: Bei einer Sintertemperatur von 900°C und einer Silberkonzentration von mehr als 0,1 Molprozent in den keramischen Folien beträgt die Diffusionskonstante 7·10⁻¹¹ cm²/s. Bei einer Sintertemperatur von 900°C und einer Silberkonzentration von weniger als 0,1 Molprozent in den keramischen Folien beträgt die Diffusionskonstante 3·10⁻⁸ cm²/s.

Durch die Dotierung der Keramik ist der Silbergehalt in der Keramik unabhängig von der Sinterung, der Rezeptur der Keramik oder von Form und Menge der Metallstrukturen. Dies führt dazu, dass die Keramik sowohl bei den thermischen Eigenschaften (thermische Ausdehnung, Schwund) als auch bei den elektrischen Eigenschaften (Kapazität, U-I-Kennlinie, Robustheit) immer gleichbleibende Eigenschaften besitzt.

Gemäß dem Ausführungsbeispiel aus Figur 3 kann auch die Passivierungsschicht 4 co-gesintert werden. In diesem Fall wird die Passivierungsschicht 4 bereits vor dem Sintern auf einer Außenseite bzw. Oberfläche der keramischen Folien aufgebracht. Beim Co-sintern mit dem Passivierungsmaterial muss auch dieses mit Silber dotiert sein, damit während des Sinterns kein Silber diffundieren in die Passivierungsschicht 4 kann. Dabei kann die Dotierung höher als der Sättigungswert des Passivierungsmaterials sein.

Gemäß einem weiteren, nicht gezeigten, Ausführungsbeispiel, kann auch die Außenmetallisierung 5 co-gesintert werden. In diesem Fall wird die Außenmetallisierung 5 bereits vor dem Sintern auf einer Außenseite bzw. Oberfläche der keramischen Folien bzw. auf der Passivierung aufgebracht. Die Außenmetallisierung 5 weist im Wesentlichen Silber auf. Die Diffusion des Silbers wird durch die Silberdotierung der keramischen Folien (und beim Co-Sintern der Passivierung auch durch deren Silberdotierung) verhindert.

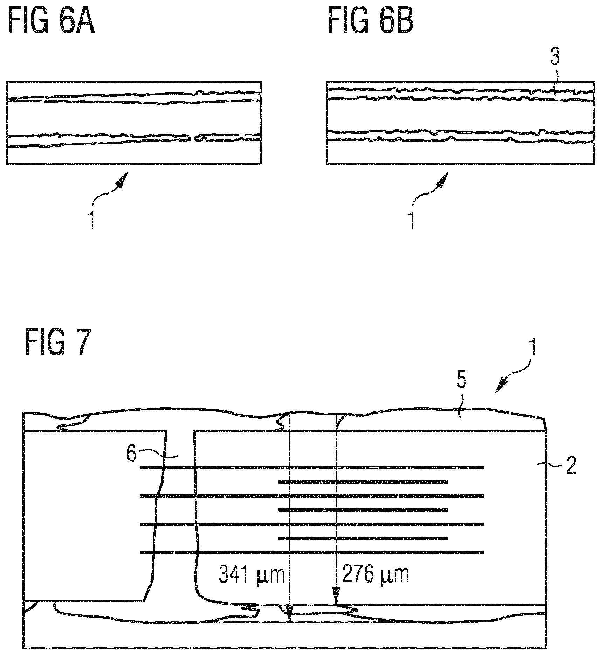

Gemäß dem Ausführungsbeispiel aus Figur 4, kann der Grundkörper 2 nach dem Sintern als Substrat oder Trägerelement verwendet werden. Figur 7 zeigt dabei eine Aufnahme eines realisierten Vielschichtbauelements. In diesem Fall können vor dem Sintern weitere Metallstrukturen (Vias 6) in den Grünkörper eingebracht und anschließend mitgesintert werden. Die weiteren Metallstrukturen weisen ebenfalls im Wesentlichen Silber auf. Die Diffusion des Silbers wird durch die Silberdotierung der keramischen Folien (und beim Co-Sintern der Passivierung auch durch deren Silberdotierung) verhindert.

Die Figur 6B zeigt eine Aufnahme eines realisierten erfindungsgemäßen Vielschichtbauelements. Auffällig ist dabei der regelmäßige Verlauf der Innenelektroden 3. Insbesondere ist erkennbar, dass bei den Innenelektroden 3 kein Materialverlust während des Sintervorgangs stattgefunden hat. Dies steht im Gegensatz zu Vielschichtbauelementen gemäß dem Stand der Technik, bei welchen der Keramikkörper nicht mit dem Elektrodenmaterial (Silber) dotiert ist (siehe Figur 6A).

Die Beschreibung der hier angegebenen Gegenstände und Verfahren ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Vielschichtbauelement / Bauelement
- 2: Grundkörper
- 3: Innenelektrode
- 4: Passivierung / Passivierungsschicht
- 5: Außenmetallisierung
- 6: Via

## Patentansprüche

1. Trägerbauelement (1) aufweisend
einen keramischen Grundkörper (2) und eine Metallstruktur (3, 5, 6), die wenigstens eine Innenelektrode (3) und wenigstens ein Via (6) aufweist, wobei
- die Metallstruktur (3, 5, 6) co-gesintert ist,
- die Metallstruktur (3, 5, 6) ≥ 99 % Silber aufweist,
- der Grundkörper (2) eine Dotierung von 0,1 bis 1 Molprozent aus einer chemischen Verbindung des Materials der Metallstruktur (3, 5, 6) aufweist, so dass eine Diffusion von Material aus der Metallstruktur (3, 5, 6) in den Grundkörper (2) während eines Sintervorgangs verringert wird,und
- der Grundkörper (2) eine mit Flüssigphasen gesinterte Varistorkeramik ist und
- der Grundkörper (2) die Zusammensetzung
-- ≥ 90 % Mol ZnO,
-- 0,5 bis 5 % Mol Sb₂O₃ oder Bi₂O₃,
-- 0,05 bis 2 % Mol Co₃O₄, Mn₂O₃, SiO₂ und/oder Cr₂O₃,
-- < 0,1 % Mol B₂O₃, Al₂O₃ und/oder NiO
aufweist.

2. Trägerelement (1) nach Anspruch 1,
wobei die Metallstruktur (3, 5, 6) eine Dotierung mit zumindest einem Material des keramischen Grundkörpers (2) aufweist.

3. Trägerelement (1) nach Anspruch 1 oder 2
wobei eine Dicke oder laterale Ausdehnung der Metallstruktur (3, 5, 6) weniger oder gleich 1,5 µm beträgt.

4. Trägerelement (1) nach einem der Ansprüche 1 bis 3,
wobei die Dotierung Silberoxid oder Silbercarbonat aufweist.

5. Trägerelement (1) nach einem der Ansprüche 1 bis 4, aufweisend wenigstens eine Passivierungsschicht (4), wobei die Passivierungsschicht (4) co-gesintert ist, wobei ein Material der Passivierungsschicht (4) ein Glas mit einem Füllmaterial oder eine Keramik aufweist, und wobei das Material vor dem Sintern auf den Grundkörper (2) aufgebracht ist.

6. Trägerelement (1) nach Anspruch 5,
wobei die Passivierungsschicht (4) mit zumindest einem Material der Metallstruktur (3, 5, 6) dotiert ist, und wobei die Dotierung höher oder gleich einer Sättigungskonzentration des Materials in der Passivierungsschicht (4) ist.

7. Verfahren zur Herstellung eines Trägerelements (1) nach einem der Ansprüche 1 bis 6 aufweisend die folgenden Schritte:
- Anordnen von Schichten aufweisend eine Keramikmasse und Schichten aufweisend eine Elektrodenpaste abwechselnd übereinander zu einem Schichtstapel, wobei die Keramikmasse mit zumindest einem Material der Elektrodenpaste dotiert ist, zur Herstellung eines Grünköpers;
- Einbringen von zumindest einem Via (6) in den Grünkörper,
- Sintern des Grünkörpers.

8. Verfahren nach Anspruch 7,
aufweisend den zusätzlichen Schritt:
- Aufbringen einer isolierenden Schicht auf zumindest einer Oberseite der Keramikmasse, wobei die isolierende Schicht mit zumindest einem Material der Elektrodenpaste und zumindest einem Material der Keramikmasse dotiert ist, und wobei die isolierende Schicht vor dem Sintern aufgebracht wird.

## Claims

1. Support element (1) having
a ceramic main body (2) and a metal structure (3, 5, 6) having at least one internal electrode (3) and at least one via (6), wherein
- the metal structure (3, 5, 6) has been co-sintered,
- the metal structure (3, 5, 6) includes ≥ 99% silver,
- the main body (2) has been doped with 0.1 to 1 mole per cent of a chemical compound of the material of the metal structure (3, 5, 6), such that diffusion of material from the metal structure (3, 5, 6) into the main body (2) during a sintering operation is reduced, and
- the main body (2) is a varistor ceramic that has been sintered with liquid phases and
- the main body (2) comprises the composition
-- ≥ 90 mol% of ZnO,
-- 0.5 to 5 mol% of Sb₂O₃ or Bi₂O₃,
-- 0.05 to 2 mol% of Co₃O₄, Mn₂O₃, SiO₂ and/or Cr₂O₃,
-- < 0.1 mol% of B₂O₃, Al₂O₃ and/or NiO.

2. Support element (1) according to Claim 1,
wherein the metal structure (3, 5, 6) has been doped with at least one material from the ceramic main body (2).

3. Support element (1) according to Claim 1 or 2,
wherein a thickness or lateral extent of the metal structure (3, 5, 6) is not more than 1.5 µm.

4. Support element (1) according to any of Claims 1 to 3,
wherein the dopant includes a silver oxide or silver carbonate.

5. Support element (1) according to any of Claims 1 to 4,
having at least one passivation layer (4), wherein the passivation layer (4) has been co-sintered, wherein a material of the passivation layer (4) includes a glass having a filler material or a ceramic, and wherein the material has been applied on the main body (2) prior to the sintering.

6. Support element (1) according to Claim 5,
wherein the passivation layer (4) has been doped with at least one material from the metal structure (3, 5, 6), and wherein the doping is not less than a saturation concentration of the material in the passivation layer (4) .

7. Process for producing a support element (1) according to any of Claims 1 to 6, having the following steps:
- arranging layers including a ceramic mass and layers including an electrode paste one on top of another in alternation to give a layer stack, wherein the ceramic mass has been doped with at least one material from the electrode paste, for production of a green body;
- introducing at least one via (6) into the green body,
- sintering the green body.

8. Process according to Claim 7,
having the following additional step:
- applying an insulating layer to at least one top side of the ceramic mass, wherein the insulating layer has been doped with at least one material from the electrode paste and at least one material from the ceramic mass, and wherein the insulating layer is applied prior to the sintering.

## Revendications

1. Élément support (1), comprenant :
un corps de base céramique (2) et une structure métallique (3, 5, 6), qui comprend au moins une électrode intérieure (3) et au moins un passage (6),
- la structure métallique (3, 5, 6) étant co-frittée,
- la structure métallique (3, 5, 6) comprenant ≥ 99 % d'argent,
- le corps de base (2) comprenant un dopage de 0,1 à 1 pour cent en moles d'un composé chimique du matériau de la structure métallique (3, 5, 6), de telle sorte qu'une diffusion du matériau de la structure métallique (3, 5, 6) dans le corps de base (2) pendant un processus de frittage soit réduite, et
- le corps de base (2) étant une céramique varistor frittée avec des phases liquides, et
- le corps de base (2) présentant la composition suivante :
-- ≥ 90 % en moles de ZnO,
-- 0,5 à 5 % en moles de Sb₂O₃ ou Bi₂O₃,
-- 0,05 à 2 % en moles de Co₃O₄, Mn₂O₃, SiO₂ et/ou Cr₂O₃,
-- < 0,1 % en moles de B₂O₃, Al₂O₃ et/ou NiO.

2. Élément support (1) selon la revendication 1, dans lequel la structure métallique (3, 5, 6) comprend un dopage avec au moins un matériau du corps de base céramique (2).

3. Élément support (1) selon la revendication 1 ou 2, dans lequel une épaisseur ou dimension latérale de la structure métallique (3, 5, 6) est inférieure ou égale à 1,5 µm.

4. Élément support (1) selon l'une quelconque des revendications 1 à 3, dans lequel le dopage comprend de l'oxyde d'argent ou du carbonate d'argent.

5. Élément support (1) selon l'une quelconque des revendications 1 à 4, comprenant au moins une couche de passivation (4), la couche de passivation (4) étant co-frittée, un matériau de la couche de passivation (4) comprenant un verre avec un matériau de remplissage ou une céramique, et le matériau étant appliqué sur le corps de base (2) avant le frittage.

6. Élément support (1) selon la revendication 5, dans lequel la couche de passivation (4) est dopée avec au moins un matériau de la structure métallique (3, 5, 6), et le dopage est supérieur ou égal à une concentration de saturation du matériau dans la couche de passivation (4) .

7. Procédé de fabrication d'un élément support (1) selon l'une quelconque des revendications 1 à 6, comprenant les étapes suivantes :
- l'agencement de couches comprenant une masse céramique et de couches comprenant une pâte d'électrode en alternance les unes sur les autres en un empilement de couches, la masse céramique étant dopée avec au moins un matériau de la pâte d'électrode, pour la fabrication d'un corps vert ;
- la disposition d'au moins un passage (6) dans le corps vert,
- le frittage du corps vert.

8. Procédé selon la revendication 7, comprenant l'étape supplémentaire suivante :
- l'application d'une couche isolante sur au moins un côté supérieur de la masse céramique, la couche isolante étant dopée avec au moins un matériau de la pâte d'électrode et au moins un matériau de la masse céramique, et la couche isolante étant appliquée avant le frittage.
